# EUROPEAN PATENT APPLICATION

(11) **EP 4 841 491 A1**
(43) Date of publication of application: **18.11.2026**
(21) Application number: 25175763.9
(22) Date of filing: 12.05.2025
(51) Int. Cl.: G06F 30/12, G06F 30/20, G06F 30/13, G06F 111/20

(54) **A METHOD AND DEVICE FOR PLANNING A LUMINAIRE COMPRISING AN ELECTRICAL ENERGY STORAGE AND A PHOTOVOLTAIC SYSTEM**

(71) Applicant: Tridonic GmbH & Co. KG, 6851 Dornbirn (AT)
(72) Inventor: Schaffgotsch, Stephanie, 6851 Dornbirn (AT); Meßmer, Jürgen, 6851 Dornbirn (AT)
(74) Representative: Rupp, Christian

(57) **Abstract**

The present invention provides a method for planning a luminaire (10) comprising an electrical energy storage (3) for electrically supplying the luminaire (10) and a photovoltaic system (1) for charging the electrical energy storage (3). The method comprises obtaining (S1000) information on a desired lighting module (5), optionally LED module, of the luminaire (10), an installation location of the luminaire (10), and the PV system (1); generating (S2000), using at least one of the obtained information and one or more databases, a recommendation for at least one of: the electrical energy storage (3), the PV system (1), a DC/DC driver (4) for electrically supplying the desired lighting module (5) with electrical energy from the electrical energy storage (3), and a control unit (2), optionally MPPT control unit, for controlling charging of the electrical energy storage (3) from the PV system (1); and outputting (S3000) the recommendation to a user.

## Description

The present invention relates to a method and a device for planning a luminaire, wherein the luminaire comprises an electrical energy storage for electrically supplying the luminaire and a photovoltaic (PV) system for charging the electrical energy storage. Preferably, the luminaire may be an outdoor luminaire, such as an outdoor luminaire comprising a lighting module that is installed at an height above ground. For example, the luminaire may be a street luminaire.

In order to provide an eco-friendly luminaire, a luminaire comprising a PV system that electrically supplies the luminaire may be used. The PV system may comprise one or more PV panels for converting sunlight to electrical energy that is used for charging an electrical energy storage of the luminaire. The electrical energy of the electrical energy storage is used for electrically supplying the luminaire and, thus, powering the luminaire, e.g. a lighting module of the luminaire. This allows electrically supplying the luminaire so that the luminaire can emit light when desired, e.g. during night when there is no sunlight. Such a luminaire may be preferably an outdoor luminaire, such as a street luminaire. The lighting provided by such a luminaire, i.e. a luminaire electrically powered by sunlight via a PV system and electrical energy storage, may be referred to as solar lighting.

In the light of the above, it is an object of the present invention to support the implementation of solar lighting and, thus, providing eco-friendly lighting. It may be an object to improve a luminaire for solar lighting with regard to the solar lighting.

These and other objects, which become apparent upon reading the following description, are solved by the subject-matter of the independent claim. The dependent claims refer to preferred embodiments of the invention.

According to a first aspect of the invention, a method for planning a luminaire is provided. The luminaire comprises an electrical energy storage for electrically supplying the luminaire and a photovoltaic (PV) system for charging the electrical energy storage. That is, the luminaire is a luminaire for solar lighting. The luminaire may be for example an outdoor luminaire, such as a street luminaire. The method comprises obtaining information on a desired lighting module (optionally being a LED module) of the luminaire, the PV system and an installation location of the luminaire. The method comprises generating, using at least one of the obtained information and one or more databases, a recommendation for at least one of: the electrical energy storage, the PV system, a DC/DC driver for electrically supplying the desired lighting module with electrical energy from the electrical energy storage, and a control unit for controlling charging of the electrical energy storage from the PV system. The control unit may be a maximum power point tracking (MPPT) control unit. The method comprises outputting the recommendation to a user.

Since the method allows providing a recommendation on components of a luminaire for solar lighting, such as the electrical energy storage, the PV system, the DC/DC driver and/or the control unit, the method allows supporting the implementation of solar lighting and, thus, providing eco-friendly lighting. Since the method considers the desired lighting module of the luminaire, the PV system of the luminaire and the installation location of the luminaire for providing the recommendation for the components of the luminaire, it allows improving a luminaire for solar lighting with regard to the solar lighting.. For example, the installation location and the PV system determine how much electrical energy can be supplied by the PV system for the solar lighting. Namely, the installation location of the luminaire influences the amount of sunlight falling on the luminaire and, thus, the PV system of the luminaire. This influences how much electrical energy can be provided by the PV system for electrically supplying the luminaire. The PV system influences how much sunlight is converted to electrical energy and, thus, how much electrical energy can be provided for electrically supplying the luminaire. The desired lighting module influences how much electrical energy is used for providing light emission of the luminaire. The method allows implementing and configuring the luminaire, e.g. the components of the luminaire, as the method may output recommendations for the electrical energy storage, the PV system, the DC/DC driver and the control unit.

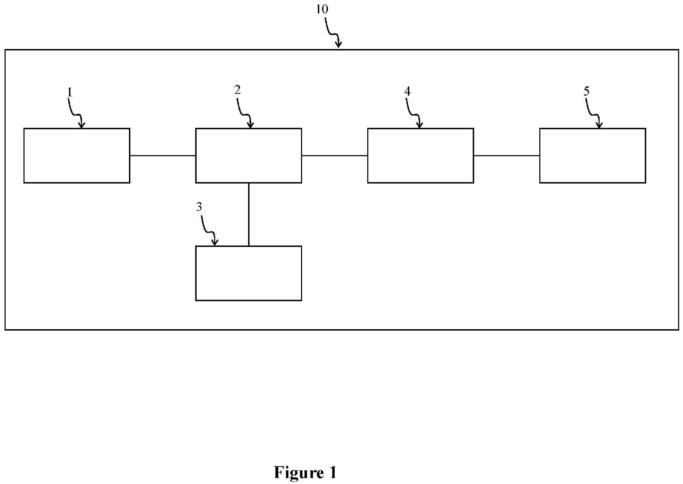

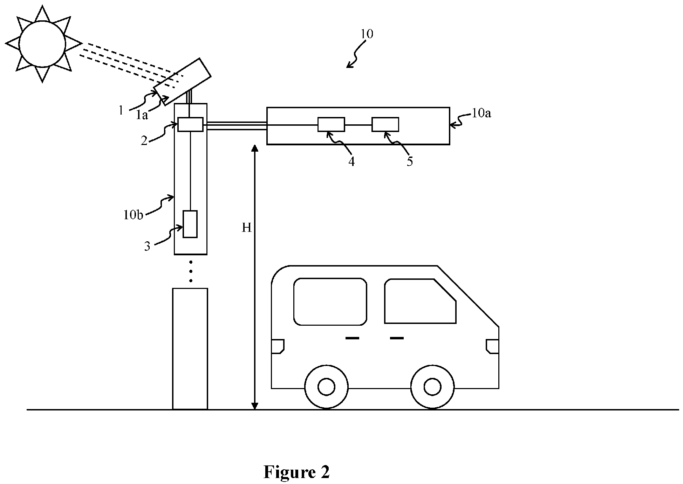

The method may be a computer-implemented method. The method may be implemented by software. For example, the method may be implemented by an application (app). The method may be implemented by an online service, e.g. a web page on the internet, which may be accessed by a user. The method may be carried out on/by a device. The device may be a user end device (e.g. a mobile user device). For example, the device may be a smartphone, a laptop, a tablet, a stationary computer etc. Optionally, the luminaire may be configured to be electrically powered only via the electrical energy storage and the PV system. That is, optionally, the luminaire does not comprise electrically connections to be electrically connected to mains. Thus, the luminaire does not need to be electrically supplied from an external electrical energy source, such as mains. Examples of the luminaire are shown in FIGs. 1 and 2 and described below with regard to these FIGs.

The electrical energy storage is a storage configured to store electrical energy. The electrical energy storage may comprise one or more rechargeable batteries. The present invention is not limited to a specific type of electrical energy storage and, thus, any known electrical energy storage may be used. The PV system is a system that is configured to convert sunlight (also referred to solar light) to electrical energy. The PV system may comprise one or more PV panels for this. The present invention is not limited to a specific type of PV system and, thus, any known PV systems may be used.

The desired lighting module is a lighting module that is desired to be used as a light source of the luminaire. Optionally, the luminaire uses LEDs as lighting means for emitting light. The abbreviation "LED" stands for "light emitting diode". Thus, the lighting module may comprise one or more LEDs. In this case the lighting module may be referred to as LED module. Optionally, more than one of the desired lighting module may be used as the light source of the luminaire. The present invention is not limited to a specific type of lighting module and, thus, any known lighting module may be used.

The DC/DC driver may be configured to convert a direct voltage (DC voltage) and/or a direct current (DC) of the electrical energy storage to an operation voltage being a direct voltage and/or an operation current being a direct current for driving the lighting module, wherein the conversion depends on the type of DC/DC driver. For example, the DC/DC driver may be configured to convert a battery voltage and/or battery current to a DC voltage and/or DC. The DC/DC driver may comprise one or more power converters, e.g. one or more actively switched power converters. The DC/DC driver may comprise a filter circuit. Optionally, in case the lighting module is electrically powered by an alternating voltage (AC voltage) and/or alternating current (AC), the DC/DC driver may be a DC/AC driver. When the lighting module is a LED module, then the DC/DC driver may be referred to as LED driver. The present invention is not limited to a specific type of DC/DC driver and, thus, any known DC/DC driver or driver for driving lighting means may be used.

The control unit may be a MPPT control unit as outlined above and, thus, may be configured to control charging of the electrical energy storage with electrical energy from the PV system such that a maximum electrical power is provided to the electrical energy storage from the PV system. The control unit may comprise at least one of a controller, microcontroller, processor, microprocessor, application specific integrated circuit (ASIC) and field-programmable gate array (FPGA). Optionally, the control unit may be a part of the DC/DC driver. The present invention is not limited to a specific type of control unit for controlling charging of the electrical energy storage with electrical energy from the PV system and, thus, any known control unit may be used.

Obtaining the information on the desired lighting module, the installation location and the PV system may comprise providing an user interface, and receiving via the user interface as a user input at least one of the information on the desired lighting module, the information on the installation location and the information on the PV system.

For example, the user interface may be a display of an application (app) or a web page that allows inputting data, such as at least one of the information on the desired lighting module, information on the installation location and information on the PV system. Herein, a user interface may be a graphical user interface.

Herein, "obtaining a respective information" may comprise receiving/accessing a default information set for the respective information and/or receiving the respective information as a user input via a user interface. Thus, for any information that may be input by a user (i.e. received as a user input), a default information may be present so that in case no user input is received for the information the default information may be used.

Optionally, the method comprises obtaining additional information on at least one of: an environment of the installation location; sunlight times at the installation location; dimension(s) of the luminaire (e.g. height of the luminaire); a position of the electrical energy storage, the DC/DC driver and/or the control unit at the luminaire; presence of one or more sensors (e.g. a presence and/or motion sensor) at the luminaire; an electrical supply time period (e.g. a number of autonomous days), during which the luminaire is to be electrically supplied from the electrical energy storage; the DC/DC driver; the control unit; a desired operation setting of the desired lighting module (e.g. a dim level of a light emission of the desired lighting module); and desired specification(s) of the electrical energy storage (e.g. charging efficiency, depth of discharge and/or backup). The method may comprise generating, using the obtained additional information in addition to the obtained information and the one or more databases, the recommendation. The term "additional information" is used to distinguish the aforementioned optional information, which may be used in addition to the information on the desired lighting module, the installation location of the luminaire, and the PV system, from said information on the desired lighting module, the installation location of the luminaire, and the PV system. The term "information" may be used instead of the term "additional information".

Already one of the above-described optional additional information may improve generating the recommendation of at least one of the electrical energy storage, PV system, DC/DC driver and control unit.

The information on the environment of the installation location may provide information on object(s), such as building(s), tree(s) etc., located near the installation location that may at least partly prevent sunlight from reaching the luminaire and, thus, the PV system (i.e. shadowing the PV system). For example, in case the luminaire is a street luminaire, the information on the environment may comprise information on characteristic(s) of the street, such as the type of street, street surface etc. The information on the sunlight times at the installation location may indicate at what points in time and for how long sunlight is present at the installation location. The information on the dimension(s) of the luminaire may be for example a height of the luminaire, as this may determine how object(s) of the environment of the installation location at least partly prevent sunlight from reaching the luminaire and, thus, the PV system, e.g. in case the PV system is provided at the height above ground when the luminaire is installed at the installation location.

The position of the electrical energy storage, the DC/DC driver and the control unit at the luminaire may determine electrical losses, which may depend on the distance between these elements and, thus, the length on the wiring for electrically connecting them. The presence of one or more sensors may influence an operation of the luminaire and, thus, electrical energy used by the luminaire. For example, in case a motion sensor is present and the luminaire emits light for a certain time period after detection of motion, the electrical energy used by the luminaire from the electrical energy storage may be less compared to a case, in which the motion sensor is not present and the luminaire emits light regardless of a motion being detected or not.

The electrical supply time period may be a time period during which the luminaire is to be provide with electrical energy from the electrical energy storage while the electrical energy storage is not recharged by the PV system. The term "autonomous electrical supply time period" may be used as a synonym for the term "electrical supply time period" as during this time period the electrical energy storage is to autonomously supply the luminaire with electrical energy (i.e. independent on whether the PV system (re)charges the electrical energy storage or not). The electrical energy supply time period may be for example a number of days, that may be referred to as "autonomous days".

The information on the DC/DC driver allows knowing how efficiently the electrical energy from the electrical energy storage can be used for electrically supplying the desired lighting module. The information on the control unit allows knowing how efficiently the electrical energy from the PV system can be used for charging the electrical energy storage. The information on the desired operation setting of the desired lighting module allows knowing how much electrical energy from the electrical energy storage will be used when operating the lighting module for providing a desired light emission. For example, in case the desired operating setting is a desired dim level, the lower the dim level the less light is emitted and, thus, the less electrical energy is used. The dime level may be a value between 0% and 100%, wherein a dim level of 0% means no light emission and a dim level of 100% means maximum light emission. The greater the dim level, the more light is emitted and vice versa.

The desired specification(s) of the electrical energy storage influences for how long the electrical energy storage can autonomously (i.e. without being recharged) electrically supply the luminaire and/or how fast the electrical energy storage can be recharged with electrical energy.

The information that may be obtained by the method allows determining, e.g. computing, the following:
- A capability of the PV system on converting sunlight to electrical energy and, thus, an amount of electrical energy during a certain time period for charging the electrical energy storage.
- How fast the electrical energy storage can be recharged with electrical energy.
- How long the electrical energy storage can autonomously provide (i.e. when not being recharged with electrical energy from the PV system) electrical energy to the luminaire (e.g. when being fully charged).
- How much electrical energy from the electrical energy storage is used ("consumed") by the luminaire, especially the desired lighting module, for providing lighting.
- How much electrical energy is lost due to wiring of the components of the luminaire and due to losses caused by the components (e.g. DC/DC driver, control unit, lighting module etc.), e.g. caused by an operation of the components. For the losses caused by the components the efficiency of the components may be taken into account.

The above-mentioned first two pieces of information allow determining an electrical power that may be provided by the PV system to the electrical energy storage. The above-mentioned last two pieces of information allow determining the amount of electrical power, by which the electrical energy storage, is discharged. This allows determining a capacity of the electrical energy storage and, thus, how long the electrical storage can autonomously provide electrical energy to the luminaire.

Obtaining the additional information may comprise providing an user interface and receiving via the user interface as a user input at least one of the additional information.

For example, the user interface may be a display of an application (app) or a web page that allows inputting data, such as at least one of the information on the desired lighting module, information on the installation location and information on the PV system.

The information on the installation location may comprise relative position data and/or absolute position data. The absolute position data may be at least one of a postal address and geographical coordinates (e.g. GPS data).

The information on the desired lighting module may comprise at least one of a lighting module type of the desired lighting module, and electrical operation parameters of the desired lighting module. For example, the electrical operation parameters may be a voltage and/or electrical power required by the desired lighting module.

Obtaining the information on the desired lighting module may comprise obtaining data on at least one of: one or more characteristics of a light emission of the desired lighting module (e.g. luminous flux, color temperature and/or color index), one or more possible operation settings of the desired lighting module (e.g. one or more desired dim levels and/or a desired dim level range), and one or more physical characteristics of the desired lighting module (e.g. shape, size and/or form factor). Obtaining the information on the desired lighting module may comprise determining, using the obtained data and one or more databases, different lighting modules (e.g. different LED modules), and outputting via a user interface the determined different lighting modules. Obtaining the information on the desired lighting module may comprise using as the obtained information on the desired lighting module information on the lighting module of the different lighting modules that is selected via the user interface.

The information on the PV system may comprises at least one of technology type of PV panel(s) of the PV system, number of PV panels of the PV system, a size of the PV panel(s) of the PV system, a position of the PV panel(s) of the PV system at the luminaire, and an orientation of the PV panel(s) of the PV system. For example, the information on the orientation of the PV panel(s) may be information on an azimuth angle and/or tilt angle of the PV panel(s).

Generating the recommendation for the electrical energy storage may comprise computing, using the information on the installation location and the information on the PV system, an electrical power that the PV system is configured to provide to the electrical energy storage. Optionally, generating the recommendation for the electrical energy storage may comprise computing, using the information on the installation location and the PV system and the information on at least one of the environment of the installation location, sunlight times at the installation location, the dimension(s) of the luminaire and the control unit, the electrical power that the PV system is configured to provide to the electrical energy storage.

Computing the electrical power that the PV system is configured to provide to the electrical energy storage may comprise determining, using the information on the installation location, an amount of light falling onto the PV system when the luminaire is installed at the installation location. Optionally, computing the electrical power that the PV system is configured to provide to the electrical energy storage may comprise determining, using the information on the installation location and the information on at least one of the environment of the installation location, sunlight times at the installation location and the dimension(s) of the luminaire, the amount of light falling onto the PV system when the luminaire is installed at the installation location.

Generating the recommendation for the electrical energy storage may comprise computing, using the information on the desired lighting module, an electrical power that is required by the luminaire. Optionally, generating the recommendation for the electrical energy storage may comprise computing, using the information on the desired lighting module and the information on at least one of the presence of one or more sensors at the luminaire, the electrical supply time period, the DC/DC driver, the control unit and the desired operation setting of the desired lighting module, the electrical power that is required by the luminaire.

Generating the recommendation for the electrical energy storage may comprise computing, using the electrical power that the PV system is configured to provide to the electrical energy storage and the electrical power that is required by the luminaire, a capacity of the electrical energy storage. Optionally, generating the recommendation for the electrical energy storage may comprise computing, using the electrical power that the PV system is configured to provide to the electrical energy storage and the electrical power that is required by the luminaire and the information on the desired specification(s) of the electrical energy storage and/or a position of the electrical energy storage at the luminaire, the capacity of the electrical energy storage.

Outputting the recommendation for the PV system may comprise outputting information on at least one of a number of PV panels of the PV system, a size of the PV panel(s), a position of the PV panel(s) of the PV system at the luminaire, and an orientation of the PV panel(s) of the PV system. For example, the orientation of the PV panel(s) of the PV system may be an azimuth angle and/or tilt angle of the PV panel(s).

Outputting the recommendation for the electrical energy storage may comprise outputting information on at least one of an electrical energy storage type and a capacity of the electrical energy storage. Optionally, outputting the recommendation for the electrical energy storage comprises outputting information on at least one of the electrical energy storage type, the capacity of the electrical energy storage, a voltage of the electrical energy storage and the desired specification(s) of the electrical energy storage.

For example, the information on the electrical energy storage type may comprise a technology of the electrical energy storage (e.g. battery technology). The voltage of the electrical energy storage may be referred to as "battery voltage".

Outputting the recommendation for the electrical energy storage, the PV system, the DC/DC driver or the control unit may comprise outputting one or more different electrical energy storages, PV systems, DC/DC drivers or control units, respectively, which optionally may be ranked with regard to fulfilling one or more requirements.

Outputting the recommendation may comprise outputting information on an operation setting of the recommended control unit and/or the recommended DC/DC driver.

Outputting the information on the operation setting may comprise at least one of outputting configuration data for configuring the control unit and/or the DC/DC driver, outputting a code (e.g. a QR code) comprising the information on the operation setting, and displaying the information.

The configuration data may be output in the form of a file that can be directly used by the control unit and/or the DC/DC driver for configuring the control unit or the DC/DC driver, respectively. Optionally, the operating setting may be programmed onto the control unit and/or the DC/DC driver using a wireless communication, such as near field communication (NFC), Bluetooth etc.

Optionally, the code (e.g. QR code) may be read by a device, such as a user end device (e.g. mobile user device), that is configured for a wireless communication, such as NFC, Bluetooth etc. The device may be used to configure the control unit and/or the DC/DC driver via the wireless communication with the operating setting received by reading the code (e.g. QR code).

Outputting the information on the operation setting by displaying the information may comprise displaying the information on a screen of a user end device, such as a mobile user device (e.g. smartphone), so that the user can input the displayed information directly into a configuration utility/device for configuring the DC/DC driver and/or control unit. Optionally, the user can input the displayed information directly into the DC/DC driver and/or control unit. For example, the information on the operation setting may be displayed in an app or on a web page. The user end device may be as outlined herein.

In the above optional cases of the wireless communication, the control unit and/or the DC/DC driver are configured for the wireless communication, respectively.

The method may comprise implementing the luminaire with at least one of the recommended electrical energy storage, PV system, DC/DC driver, and control unit. The method may comprise configuring the control unit and/or the DC/DC driver according to the information on the operation setting.

For example, a user may implement the luminaire using at least one of the recommended electrical energy storage, PV system, DC/DC driver and control unit. The user may implement the luminaire using the desired lighting module. The user may configure the control unit and/or the DC/DC driver according to the information on the operation setting. For example, the user may configured the control unit and/or the driver according to the information on the operation setting using a configuration software (e.g. companion-suite).

Optionally, the method comprises ordering at least one of the recommended electrical energy storage, PV system, control unit, and the DC/DC driver from an online store. Optionally, the method comprises providing the information on the operation setting to the online store. Optionally, additional information obtained during execution of the method (e.g. input by the user during execution of the method) and/or determined during the execution of the method may be provided to the online store. Providing the operation setting and optionally the aforementioned additional information to the online store allows delivering the recommended electrical energy storage, PV system, control unit, and the DC/DC driver such that the respective component is already configured according to the operation setting and/or aforementioned additional information. This allows delivering components to a customer (user) according to customer specific demands.

In order to achieve the method according to the first aspect of the present invention, some or all of the above described optional features may be combined with each other.

According to a second aspect of the invention, a device for planning a luminaire is provided. The luminaire comprises an electrical energy storage for electrically supplying the luminaire and a photovoltaic (PV) system for charging the electrical energy storage. That is the luminaire is a luminaire for solar lighting. The luminaire may be for example an outdoor luminaire, such as a street luminaire. The device is configured to perform the method according to the first aspect of the present invention, as described above.

The device may be a user end device (e.g. a mobile user device). For example, the device may be a smartphone, a laptop, a tablet, a stationary computer etc.

The description with regard to the method according to the first aspect of the present invention is also valid for the device according to the second aspect of the present invention

The device according to the second aspect of the invention achieves the same advantages as the method according to the first aspect of the invention. The device may comprise means for inputting data and/or displaying information. For example, the device may comprise means for displaying the user interface (e.g. a graphic user interface). The means may be for example a screen, such as a touch screen. The means for inputting data and/or displaying information may be implemented according to any way known in the art. Herein, the terms "data" and "information" may be understood as synonyms.

In order to achieve the device according to the second aspect of the present invention, some or all of the above described optional features may be combined with each other.

According to a third aspect of the invention, a computer program is provided. The computer program comprises instructions which, when the program is executed by a computer, cause the computer to carry out the method according to the first aspect of the present invention.

The computer program may be software, such as an application (app) or an online service, such as a web page. The app may be downloadable from an app store. The device of the second aspect may be configured to carry out the computer program of the third aspect and, thus, the method according to the first aspect.

The description with regard to the method according to the first aspect of the present invention is also valid for the computer program according to the third aspect of the present invention

The computer program according to the third aspect of the invention achieves the same advantages as the method according to the first aspect of the invention.

According to a fourth aspect of the invention, a computer-readable storage medium is provided. The computer-readable storage medium comprises instructions which, when executed by a computer, cause the computer to carry out the method according to the first aspect of the present invention.

The device of the second aspect may be configured to receive the computer-readable storage medium of the fourth aspect and, thus, execute the instructions of the computer-readable storage medium and carry out the method according to the first aspect.

The description with regard to the method according to the first aspect of the present invention is also valid for the computer-readable storage medium according to the fourth aspect of the present invention

The computer-readable storage medium according to the fourth aspect of the invention achieves the same advantages as the method according to the first aspect of the invention.

All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed figures (FIGs.), in which
- **FIG. 1**: shows an example of a luminaire that may be planned by a method according to an embodiment of the present invention;
- **FIG. 2**: is a schematic view of an example of a luminaire that may be planned by a method according to an embodiment of the present invention;
- **FIG. 3**: shows an example of a method according to an embodiment of the present invention for planning a luminaire, such as the luminaire of FIG. 1 or 2;
- **FIGs. 4 to 7**: show an example of an implementation form of the method of FIG. 3; and
- **FIGs. 8 and 9**: show an example of an implementation form of the method of FIG. 3.

In the figures (FIGs.), corresponding elements have the same reference signs. The proportions and dimensions of the elements shown in FIG. 2 do not represent the luminaire to scale, but are merely chosen to describe the structure and function of the luminaire.

**FIG. 1** shows an example of a luminaire that may be planned by a method according to an embodiment of the present invention; and **FIG. 2** is a schematic view of an example of a luminaire that may be planned by a method according to an embodiment of the present invention. The luminaires of FIGs. 1 and 2 are luminaires for solar lighting.

As shown in FIG. 1, the luminaire 10 for solar lighting may comprise a lighting module 5, such as a LED module comprising one or more LEDs, for providing a light emission of the luminaire 10. Further, the luminaire 10 may comprise an electrical energy storage 3 for storing electrical energy that is used for electrically supplying the luminaire 10, e.g. electrically supplying the lighting module 5 and, thus, the light emission of the luminaire 10. The luminaire 10 may comprise a DC/DC driver 4 for driving/operating the lighting module 5 using the electrical energy stored in the electrical energy storage 3. That is, the DC/DC driver 4 may control the light emission by the lighting module 5 by controlling electrical energy supplied to the lighting module 5, wherein the DC/DC driver 4 uses the electrical energy storage 3 as an electrical energy source. The luminaire 10 comprises a PV system 1 that is configured to convert sunlight to electrical energy for charging the electrical energy storage 3. That is, the PV system 1 may provide electrical energy to the electrical energy storage 3 in order to be stored by the electrical energy storage 3, wherein the stored electrical energy may be used for electrically supply the operation of the luminaire 10, such as an operation of the lighting module 5 for emitting light. The luminaire 10 may comprise a control unit 2 that is configured to control the charging of the electrical energy storage 3 with electrical energy provided by the PV system 1. The control unit 2 may perform a maximum power point tracking (MPPT) and, thus, may be a MPPT control unit.

The luminaire 10 may be an outdoor luminaire, such as a street luminaire. An example of an implementation of the luminaire 10 is shown in FIG. 2. According to this example, the luminaire 10 may comprise a pole 10b that holds a luminaire head 10a at a height H above ground. As indicated in FIG. 2, the luminaire 10 may be for example a street luminaire. The lighting module 5 may be arranged at the luminaire head 10a (e.g. at least partly in a housing of the head 10a) in order to provide lighting in the direction of the ground, e.g. a street on which vehicle(s) may drive. The DC/DC driver 4 may be arranged at the luminaire head 10a (e.g. in the housing of the head 10a). The DC/DC driver may alternatively be arranged at the pole 10b, e.g. inside the pole 10b. The control unit 2 may be arranged at the pole 10b (e.g. inside the pole 10b) or at the head 10a (e.g. inside the housing of the head 10a). The PV system 1 may comprise one or more PV panels 1a for converting sunlight (that is presented in FIG. 2 by dashed lines) to electrical energy. In FIG. 1, one PV panel 1a is shown, which is only by way of example and, thus, the PV system 1 may comprise more than one PV panel 1a. The following description with regard to the PV panel 1a is correspondingly valid in case of multiple PV panels. The PV system 1 and, thus, the PV panel 1a may be arranged at the pole 10b. For example, as shown in FIG. 2, the PV panel 1a may be arranged at the top of the pole 10b. This is only by way of example and, thus, the PV panel 1a may be arranged at a different position of the pole 10b. Optionally, the PV panel 1a may be arranged at a different position at the luminaire 10, such as at the head 10a, e.g. on a surface of the housing of the head 10a. In case of multiple PV panels 1a, the PV panels 1a may be arranged at different positions at the luminaire 10. As shown in FIG. 2, the orientation of the PV panel 1a may be set so that sunlight falls onto the PV panel 1a. With regard thereto, the orientation of the PV panel 1a may be optimized. The orientation may comprise the azimuth angle and a tilt angle (in FIG. 2 the PV panel 1a is tilted). The electrical energy storage 3 may be positioned at the pole 10b, e.g. inside the pole 10b as shown in FIG. 2. Alternatively, the electrical energy storage 3 may be provided below ground at the luminaire 10 or at the PV system 1. The present invention is not limited to a specific position of the PV system 1, the electrical energy storage 3, the control unit 2 and the DC/DC driver 4 at the luminaire 10.

Depending on where the different components of the luminaire 10, e.g. the PV system 1 (i.e. the PV panel(s) 1a), the control unit 2, the electrical energy storage 3 and the DC/DC driver 4, are positioned at the luminaire 10, the wiring between the different components has a different length and, thus, causes a different amount of electrical losses. In the following a method is described for planning a luminaire for solar lighting, such as the luminaires 10 of FIGs. 1 and 2.

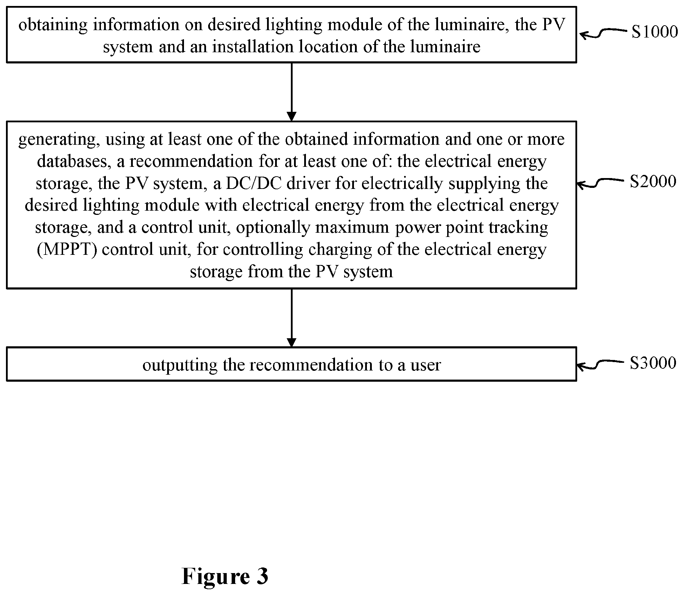

**FIG. 3** shows an example of a method according to an embodiment of the present invention for planning a luminaire, such as the luminaire of FIG. 1 or 2. The method of FIG. 3 is an example of the method according to the first aspect of the present invention. The description of the method of the first aspect is correspondingly valid for the method of FIG. 3.

As shown in FIG. 3, the method comprises a step S1000 of obtaining information on a desired lighting module 5 of the luminaire 10, the PV system 1 and an installation location of the luminaire 10. The method further comprises the step S2000 of generating, using at least one of the obtained information and one or more databases, a recommendation for at least one of: the electrical energy storage 3, the PV system 1, the DC/DC driver 4 for electrically supplying the desired lighting module 5 with electrical energy from the electrical energy storage 3, and the control unit 2 for controlling charging of the electrical energy storage 3 from the PV system 1. That is, in step S2000 at least one of the information obtained in step S1000 may be used together with one or more databases for generating a recommendation of at least one of the electrical energy storage 3, the PV system 1, the DC/DC driver 4 and the control unit 2. As shown in FIG. 3, the method may comprise a step S3000 of outputting to a user the recommendation generated at step S2000.

The step S3000 of outputting the recommendation may comprise outputting information on an operation setting of the recommended control unit 2 and/or the recommended DC/DC driver 4 (not shown in FIG. 3). That is, optionally, in the step S3000 the recommendation for the control unit 2 with the operation setting of the recommended control unit 2 may be output. For example, the operation setting of the control unit 2 may be a control scheme for controlling charging of the electrical energy storage 3. Optionally, in the step S3000 the recommendation for the DC/DC driver 4 with the operation setting of the recommended DC/DC driver 4 may be output. The operation setting of the DC/DC driver 4 may be for example a control scheme for driving the lighting module 5.

Outputting information on the operation setting may comprise at least one of outputting configuration data for configuring the control unit 3 and/or the DC/DC driver 4, outputting a code (e.g. QR code) comprising the information on the operation setting, and displaying the information. The configuration data may be directly used for configuring the control unit 2 and/or DC/DC driver 4. The code (e.g. QR code) may be read by a user using a user end device, e.g. a mobile user device such as a smartphone. This allows the user to configure the control unit 2 and/or the DC/DC driver 4. The information may be displayed by a screen. That is, a screen may display the operation setting of the control unit 2 and/or DC/DC driver 4. The screen may be part of a user end device, e.g. a mobile user device such as a smartphone.

After the step S3000 of outputting the recommendation to the user, the method may comprise implementing the luminaire 10 with at least one of the recommended electrical energy storage 3, PV system 1, DC/DC driver 4, and control unit 2 (not shown in FIG. 3). This allows using the desired lighting module 5 and installing the luminaire 10 at the installation location, while improving the luminaire 10 with regard to providing solar lighting (i.e. lighting electrically powered using sunlight).For example, the luminaire 10 may be implemented using the recommended electrical energy storage 3, PV system 1, DC/DC driver 4, and control unit 2. The implementation of the luminaire 10 may be done by a person, e.g. user. The method may comprise configuring the control unit 2 and/or the DC/DC driver 4 according to the information on the operation setting.

Optionally, the method comprises ordering at least one of the recommended electrical energy storage 3, PV system 1, control unit 2, and the DC/DC driver 4 from an online store (not shown in FIG. 3). Optionally, the method comprises providing the information on the operation setting to the online store.

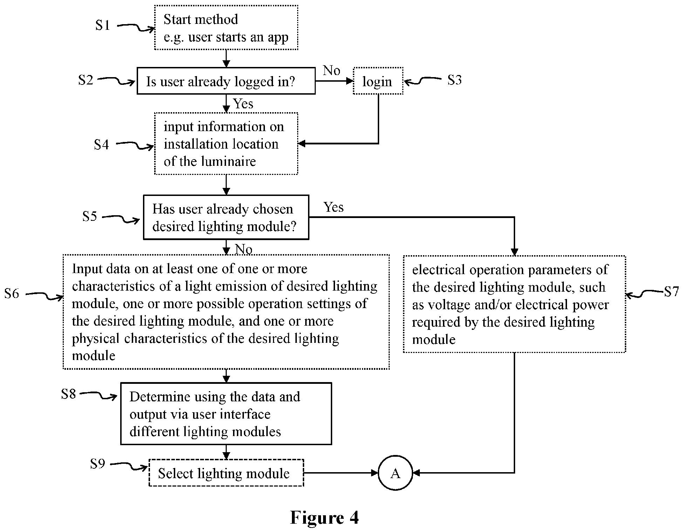

For further information on the method for planning a luminaire 10 for solar lighting, such as the luminaires 10 of FIGs. 1 and 2, reference is made to the method according to the first aspect of the invention and the following description with regard to FIGs. 4 to 9.

**FIGs. 4 to 7** show an example of an implementation form of the method of FIG. 3. The description of the method of the first aspect and the description of FIGs. 1 to 3 is correspondingly valid. For the example of FIGs. 4 to 7, it is assumed that the method is implemented in the form of software, e.g. as an application (app) or a web page, that may be accessed by a user. For example the app may be downloaded by the user from an app store. The web page may be accessed via a web browser. Further it is assumed that the method is performed in that the user uses a user end device (e.g. mobile user device), such as a smartphone, tablet, laptop, stationary computer etc. For the following description, the user accesses an app for performing an example of the method of FIG. 3. This is only by way of example and may be different ,wherein the description is correspondingly valid.

In a step S1, the user may start the app for planning the luminaire 10 for solar lighting. That is, the method may be started. Optionally, the user may have a user account so that information generated by the method, such as recommendation(s) for the electrical energy storage 3, the PV system 1, the control unit 2 and the DC/DC driver 4, and/or information/data input by the user (i.e. obtained by the app), such as information on the PV system 1, the desired lighting module and the installation location of the luminaire 10, may be stored and used again when the user logs into its user account. Thus, in a step S2 following the step S1, it may be checked whether the user is logged in already or not. In case the user is not logged in (No at step S2), the user may login in a step S3 and the method may proceed to step S4. For example, this may be done by the app providing a user interface for logging into an user account comprising e.g. an input for a user name and an input for a password. Otherwise (Yes at step S2) the method may directly proceed to step S4. The steps S2 and S3 are merely optionally and, thus, may be omitted. In step S4 the user inputs the information on the installation location of the luminaire. That is, in step S4 the information of the installation location of the luminaire 10 is obtained. For example, the app may provide a user interface providing an input for inputting the installation location or a map on which the installation location may be marked. The step S4 is an example of the step of obtaining information on the installation location of the step S1000 of the method of FIG. 3.

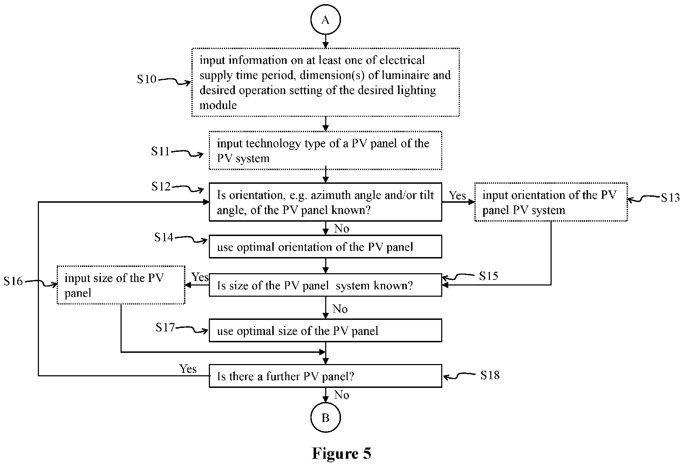

In step S5, it is checked whether the user has already chosen a desired lighting module. For example, the app may request the user to indicate via a respective user interface whether the desired lighting module is chosen already, e.g. using a button for "Yes" and a button for "No". In case the desired lighting module 5 has been chosen already (Yes at step S5), the user may input electrical operation parameters of the desired lighting module (e.g. voltage and/or electrical power required by the desired lighting module). These electrical operation parameters may have a direct impact on the amount of electrical energy required/used by the lighting module when being operated/driven to emit light. For example, the app may provide a user interface that allows inputting the electrical operation parameters, such as the aforementioned voltage and/or electrical power. Otherwise, in case no desired lighting module has been chosen (No at step S5), in a step S6 the user may input data on at least one of: one or more characteristics of a light emission of the desired lighting module, one or more possible operation settings of the desired lighting module, and one or more physical characteristics of the desired lighting module. For example, the app may provide a user interface that allows inputting the aforementioned data. In a step S8 following the step S6, the app may determine different lighting modules using the data obtained in step S6 and output the determined different lighting modules. For this, the app may access a database comprising information on multiple lighting modules, especially multiple lighting modules wherein each of the lighting modules is associated with information on at least one of characteristic(s) of the light emission, possible operation setting(s) and physical characteristic(s). In step S9, the user may select the desired lighting module 5 out of the determined different lighting modules. The steps S5, S6, S7, S8 and S9 are an example of the step of obtaining information on the desired lighting module of the step S1000 of the method of FIG. 3. After the step S7 and S9 shown in FIG. 4, the optional step S10 may follow, which is shown in FIG. 5.

In step S10, the user may input information on at least one of the electrical supply time period, during which the luminaire 10 is to be electrically supplied from the electrical energy storage 3; dimension(s) of the luminaire 10 (e.g. a height of the luminaire 10) and a desired operation setting (e.g. a desired dim level) of the desired lighting module 5. For example, the app may provide a user interface that allows inputting the aforementioned information. The step S10 is optional and, thus, may be omitted. Next, in a step S11, the user may input a technology type of a PV panel 1a of the PV system 1. For example, the app may provide a user interface that allows inputting said information. In a step S12, the user is requested to indicate, whether the orientation (e.g. the azimuth angle and/or tilt angle) of the PV panel 1a is known. For example, the app may request the user to indicate via a respective user interface whether the orientation of the PV panel 1a is known, e.g. using a button for "Yes" and a button for "No". In case the orientation is known (Yes at step S12), in a step S13, the user may input the orientation. For example, the app may provide a user interface that allows inputting the information on the orientation of the PV panel 1a. In case the orientation is not known (No at Step S12), the app may use an optimal orientation of the PV panel 1a, which corresponds to step S14. For example, the optimal orientation may be a default information or it may be received from a respective database depending on the installation location of the luminaire 10. Namely, depending on the installation location the angle of incident of the sunlight onto the luminaire may be different so that the orientation of the PV panel 1a may be different for optimizing (i.e. increasing) an amount of sunlight falling onto the PV panel 1a.

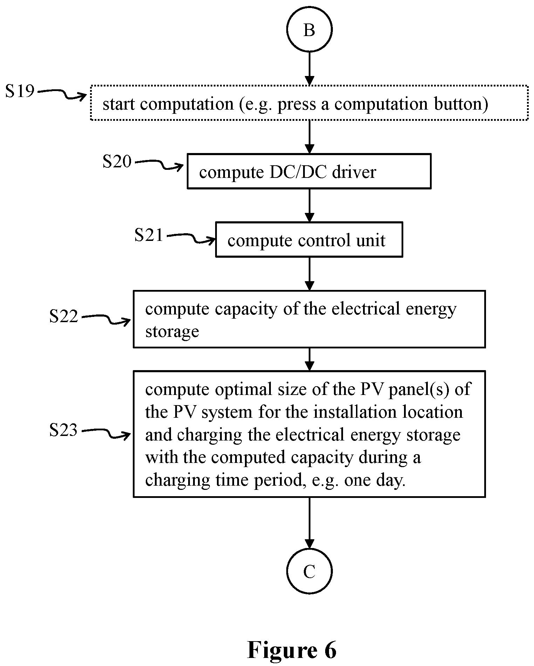

In a next step S15, the user is requested to indicate, whether the size of the PV panel 1a is known. The greater the size, the more electrical energy may be provided by the PV panel 1a and vice versa (assuming the same amount of sunlight is provided). For example, the app may request the user to indicate via a respective user interface whether the size of the PV panel 1a is known, e.g. using a button for "Yes" and a button for "No". In case the orientation is known (Yes at step S15), in a step S16, the user may input the size. For example, the app may provide a user interface that allows inputting the information on the size of the PV panel 1a. In case the size is not known (No at Step S15), the app may use an optimal size of the PV panel 1a, which corresponds to step S17. For example, the optimal size may be a default information or it may be received from a respective database. In a next step S18, the user is requested to indicate, whether the PV system 1 comprises a further PV panel 1a, i.e. whether there are multiple PV panels 1a. For example, the app may request the user to indicate via a respective user interface whether there is a further PV panel 1a, e.g. using a button for "Yes" and a button for "No". In case there are additional PV panel(s) 1a (Yes at step S18), the steps S12 to S18 may be repeated for each further PV panel 1a, as shown in Figure 5. In case there is not further PV panel 1a (No at Step S18), the process proceeds to step S19 which is shown in FIG. 6. The steps S11 to S18 are an example of the step of obtaining information on the PV system 1 of the step S1000 of the method of FIG. 3.

In step S19 a computation by the app may be started, wherein the information obtained in the previous steps may be used for the computation. For this, the app may provide a user interface showing a computation button, wherein by pressing said button the user may start the computation. In a step S20 the DC/DC driver 4 may be computed. In other words, a recommendation for the DC/DC driver 4 may be generated. For this, the information on the desired lighting module 5 may be used. That is, DC/DC driver(s) that are able to drive the desired lighting module 5 may be provided as a recommendation for the DC/DC driver 4. Optionally, the information on the installation location may be additionally used for generating the recommendation for the DC/DC driver 4. For example, the installation location of the luminaire 10 provides information on the temperature, humidity and further environmental conditions. This allows recommending a DC/DC driver 4 that is able to operate in such environmental conditions existing at the installation location. For determining the DC/DC driver(s) 4 to be recommended a respective database may be used, which comprises multiple DC/DC drivers in association with information on which lighting module(s) can be driven by the respective DC/DC driver and optionally information on environmental conditions for which the respective DC/DC driver is suited for.

In a step S21 the control unit 2 may be computed. In other words, a recommendation for the control unit 2 may be generated. For this, the information on the PV system 1, e.g. the technology of the PV system 1, may be used. Optionally, the information on the installation location may be additionally used for generating the recommendation for the control unit 2. For example, the installation location of the luminaire 10 provides information on the temperature, humidity and further environmental conditions. This allows recommending a control unit 2 that is able to operate in such environmental conditions existing at the installation location. For determining the control unit(s) 2 to be recommended a respective database may be used, which comprises multiple control units in association with information on which PV system technologies may be controlled by the respective control unit and optionally information on environmental conditions for which the respective control unit is suited for.

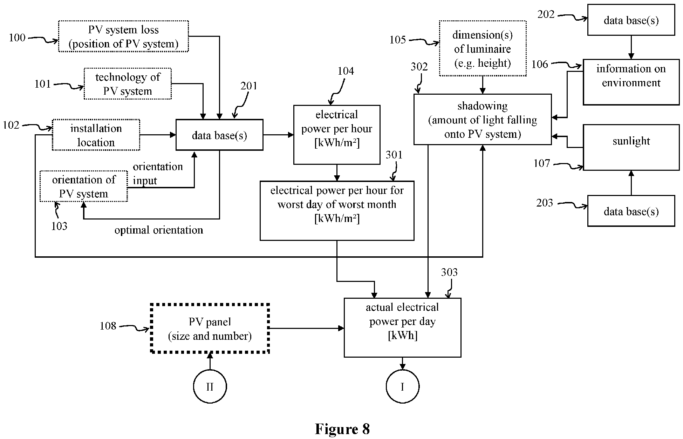

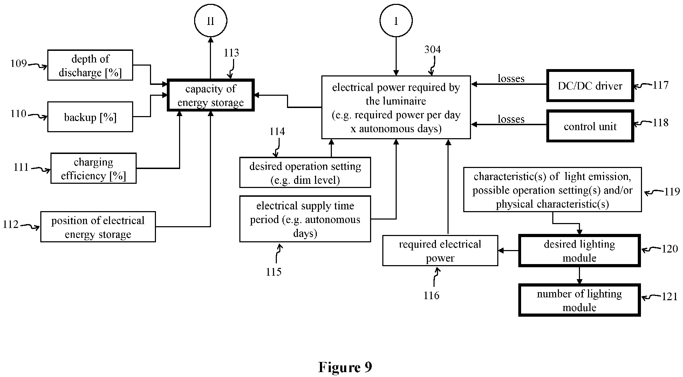

In a step S22 the capacity of the electrical energy storage 3 may be computed. In other words, a recommendation for the electrical energy storage 3 may be generated. For this, the information on the PV system 1, the desired lighting module 5 and the installation location of the luminaire 10 may be used. For more information on how the recommendation for the electrical energy storage 3 may be generated reference is made to the corresponding description of the method of the first aspect and the description of FIGs. 8 and 9.

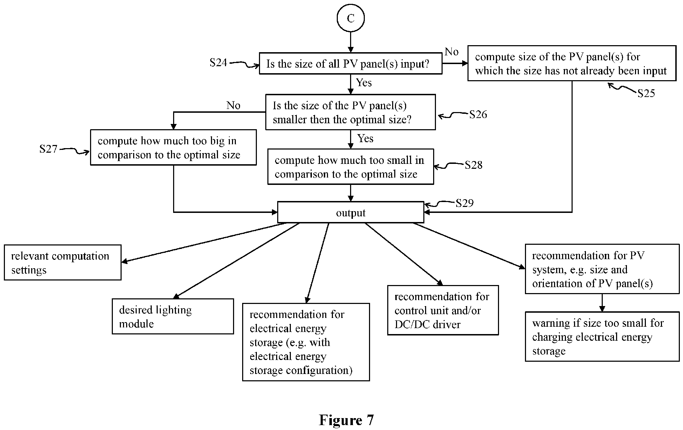

In a step S23 the optimal size of the PV panel(s) 1a of the PV system 1 for the installation location and charging the electrical energy storage with the computed capacity during a charging time period, e.g. one day, may be computed. In other words, a recommendation for the PV system 1 may be generated. For this, the information on the PV system 1, the desired lighting module 5 and the installation location of the luminaire 10 may be used. For more information on how the recommendation for the PV system 1 may be generated reference is made to the corresponding description of the method of the first aspect and the description of FIGs. 8 and 9. The process proceeds to step S24 which is shown in FIG. 7. The steps S20 to S23 are an example of the step of generating the recommendation of the step S2000 of the method of FIG. 3.

Next the optional steps S24 to S28 may be performed. In a step S24, it is checked whether the size of all PV panel(s) 1a have been already input. In case this is false (No at step S24), in a step S25, the size of the PV panel(s) 1a, for which the size has not already been input, may be computed. For this, information on the amount of light falling on the PV system 1, the amount of electrical energy providable by a PV panel 1a in response to the light falling on the PV panel 1a, and the amount of electrical power required by the desired lighting module 5 may be used. In case the size of all PV panel(s) 1a have been input (Yes at step S24), in step S26 it may be checked whether the size of the PV panel(s) 1a is smaller than the optimal size or not. In case the size is greater than the optimal size (No at step S26), it may be determined in step 27 how much the size is greater than the optimal size. In case the size is smaller than the optimal size (Yes at step S26), it may be determined in step S28 how much the size is smaller than the optimal size. Next, after any one of the optional steps S25, S27 and S28, in a step S29 information may be output by the app. The step S29 is an example of the step S3000 of the method of FIG. 3.

As shown in FIG. 7, the relevant computation settings, i.e. the information used during the computations, may be output. Information on the desired lighting module may be output. A recommendation for the electrical energy storage 3 optionally together with information on the electrical energy storage configuration may be output. A recommendation for the control unit 2 and/or DC/DC driver 4 may be output. A recommendation for the PV system 1 optionally with information on the size and orientation of the PV panel(s) may be output. Optionally, as shown in FIG. 7, in case in the optional step S28 it is determined that the size of the PV panel(s) 1a is too small in order to sufficiently charge the electrical energy storage 3 and, thus, provide sufficient electrical energy for the luminaire 10 with the desired lighting module 5 to operate properly, a warning may be output. The different information, e.g. the recommendation(s), operating setting and optional additional information, may be output as described herein.

In FIGs. 4 to 7, the dashed boxes represent user inputs. The steps of FIGs. 4 to 7 may be in a different order shown in the FIGs. 4 to 7. Optionally, in the steps of FIGs. 4 to 7, at which information may be input by the user, such as the electrical supply time period (cf. step S10), the dimension(s) of the luminaire 10 (cf. step S10), the desired operation setting of the desired lighting module 5 (cf. step S10), the technology type of the PV panel 1a (cf. step S11) etc., there may be a default information set so that in case the user does not input (e.g. does not want to input) information at the respective step, the respective default information can be used. For example, for the desired operation setting of the desired lighting module 5 a default operation setting (e.g. a default dim level) may be set, for the technology type of the PV panel 1a a default technology may be set, etc. When default information is present, the user may change the respective default information with the information that is input by the user. The aforementioned description with regard to default information and inputting information is correspondingly valid for FIGs. 8 and 9.

**FIG. 8** **and** **9** show an example of an implementation form of the method of FIG. 3. The description of the method of the first aspect and the description of FIGs. 1 to 7 is correspondingly valid. In FIGs. 8 and 9, dashed boxes represent user inputs and bold boxes represent outputs.

For example, as indicated by boxes 100, 101, 102, 103, 201 and 104 in FIG. 8, the information 100 on the electrical losses of the PV system 1 due to wiring for electrically connecting the PV system 1 with other components of the luminaire 10, the information 101 on the technology of the PV system 1, the information 102 on the installation location of the luminaire 10, and the information 103 on the orientation of the PV system 1 may be used to determine using respective database(s) 201 the electrical power that may be provided by a square meter of a PV panel 1a of the PV system 1 per hour, which is represented by the box 104. The database(s) may be for example database(s) of the photovoltaic geographical information system (PVGIS). Based on this, the electrical power that may be provided by a square meter of a PV panel 1a per hour for a worst day of a worst month (i.e. a day on which a minimum amount of electrical power is provided per hour) may be determined. This is represented by box 301 in FIG. 8.

As indicated in FIG. 8 by boxes 102, 105, 106, 107, 202, 203 and 302, a shadowing of the PV system 1 by object(s) in the vicinity of the installation location of the luminaire 10 and, thus, the amount of light falling onto the PV system 1 may be determined. For this, information 106 on the environment of the installation location of the luminaire 10 may be obtained using respective database(s) 202. For example, database(s) from OpenStreetMap (OSM) comprising information on buildings in an environment may be used. In addition, information 107 on sunlight times at the installation location of the luminaire 10 may be obtained from respective database(s) 203. For example, databases(s) from pvlib phyton (phyton library) may be used. In addition, information 105 on the dimension(s), such as the height H, of the luminaire may be used. For example, when the PV system 1 is arranged on the top of the luminaire 10 at the height H of the luminaire 10 above ground, then an object near the installation location of the luminaire 10 will provide a different shadow on the PV system 1 for different heights H of the luminaire 10. Using the information 301 on the electrical power that may be provided by a square meter of a PV panel 1a per hour for a worst day of the worst month, the information 302 on the shadowing of the PV system 1 by object(s) in the vicinity of the installation location of the luminaire 10, and information 108 on the PV panel(s) 1a of the PV system 1 (such as the size and number of PV panels 1a), the actual electrical power that may be provided by the PV system 1 (i.e. by the actual size of the PV panel(s) of the PV system 1) for charging the electrical energy storage 3 may be determined. The actual electrical power per day is represented by the box 303 in FIG. 8.

As shown in FIG. 9, the capacity 113 of the electrical energy storage 3 may be determined (e.g. computed) using the electrical power that the PV system 1 is configured to provide to the electrical energy storage 3 (i.e. the actual electrical power per day, cf. box 303 of FIG. 8), an electrical power that is required by the luminaire 10 (as represented by the box 304 in FIG. 9) and optionally at least one of an information on desired specification(s) of the electrical energy storage 3 and an information 112 on a position of the electrical energy storage 3 at the luminaire 10. The desired specification(s) may comprise at least one of depth of discharge 109, the backup 110 and the charging efficiency 111 of the electrical energy storage 3, as shown in FIG. 9. The position of the electrical energy storage 3 has an impact on the wiring of the storage 3 with other components of the luminaire 10 and, thus, on electrical losses caused by the wiring.

As shown in FIG. 9, the electrical power 304 required by the luminaire 10 may be determined using the information on the desired lighting module 5. For example, based on the information 119 on desired characteristic(s) of the light emission, possible operation setting(s) and/or physical characteristic(s) of the lighting module the desired lighting module 5 may be determined, as indicated in box 120. Information 121 on a number of the lighting module 5 may optionally be also determined. Using the determined lighting module (i.e. lighting module type) the electrical power 116 required by the desired lighting module 5 may be determined. Optionally, using the information 116 on the desired lighting module 5 (e.g. the electrical power required by the desired lighting module) and at least one of the information 115 on the electrical supply time period, information 117 on the DC/DC driver 4 (e.g. position of the DC/DC driver 4 at the luminaire 10), information 118 on the control unit 2 (e.g. position of the control unit 2 at the luminaire 10), and information 114 on the desired operation setting of the desired lighting module 2, the electrical power that is required by the luminaire 10 may be determined. The position of the DC/DC driver 4 at the luminaire 10 has an impact on the wiring of the driver 4 with other components of the luminaire 10 and, thus, on electrical losses caused by the wiring. The position of the control unit 2 has an impact on the wiring of the control unit 2 with other components of the luminaire 10 and, thus, on electrical losses caused by the wiring.

As indicated in FIGs. 8 and 9, especially by the roman number "II", the recommended capacity 113 of the energy storage 3 and, thus, the recommended energy storage 3 may have an impact on the size and number of the PV panels 1a of the PV system 1.

For further information on the inputs, outputs and computations shown in FIGs. 8 and 9 reference is made to the corresponding description of the method of the first aspect.

The description of FIGs. 1 to 9 may be combined to provide a method, device, computer program and computer-readable storage medium according to the present invention.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A method for planning a luminaire (10), optionally street luminaire, comprising an electrical energy storage (3) for electrically supplying the luminaire (10) and a photovoltaic, PV, system (1) for charging the electrical energy storage (3), wherein the method comprises
- obtaining (S1000) information on a desired lighting module (5), optionally LED module, of the luminaire (10), an installation location of the luminaire (10), and the PV system (1);
- generating (S2000), using at least one of the obtained information and one or more databases, a recommendation for at least one of:
- the electrical energy storage (3),
- the PV system (1),
- a DC/DC driver (4) for electrically supplying the desired lighting module (5) with electrical energy from the electrical energy storage (3), and
- a control unit (2), optionally maximum power point tracking, MPPT, control unit, for controlling charging of the electrical energy storage (3) from the PV system (1); and
- outputting (S3000) the recommendation to a user.

2. The method according to claim 1, wherein obtaining (S2000) the information on the desired lighting module (5), the installation location and the PV system (1) comprises
- providing an user interface, and
- receiving via the user interface as a user input at least one of the information on the desired lighting module (5), the information on the installation location and the information on the PV system (1).

3. The method according to any one of the previous claims, wherein the method comprises
- obtaining additional information on at least one of:
- an environment of the installation location,
- sunlight times at the installation location,
- dimension(s) of the luminaire (10), e.g. height of the luminaire (10),
- a position of the electrical energy storage (3), the DC/DC driver (4) and/or the control unit (2) at the luminaire (10),
- presence of one or more sensors, e.g. a presence and/or motion sensor, at the luminaire (10),
- an electrical supply time period, e.g. a number of autonomous days, during which the luminaire (10) is to be electrically supplied from the electrical energy storage (3),
- the DC/DC driver (4),
- the control unit (2),
- a desired operation setting of the desired lighting module (5), e.g. a dim level of a light emission of the desired lighting module (5), and
- desired specification(s) of the electrical energy storage (3), e.g. charging efficiency, depth of discharge and/or backup; and
- generating, using the obtained additional information in addition to the obtained information and the one or more databases, the recommendation.

4. The method according to claim 3, wherein obtaining the additional information comprises
- providing an user interface and
- receiving via the user interface as a user input at least one of the additional information.

5. The method according to any one of the previous claims, wherein
- the information on the installation location comprises relative position data and/or absolute position data, e.g. at least one of a postal address and geographical coordinates, e.g. GPS data.

6. The method according to any one of the previous claims, wherein the information on the desired lighting module (5) comprises at least one of
- a lighting module type of the desired lighting module (5), and
- electrical operation parameters of the desired lighting module (5), e.g. voltage and/or electrical power required by the desired lighting module (5).

7. The method according to any one of the previous claims, wherein obtaining (S1000) the information on the desired lighting module (5) comprises
- obtaining data on at least one of:
- one or more characteristics of a light emission of the desired lighting module (5), e.g. luminous flux, color temperature and/or color index,
- one or more possible operation settings of the desired lighting module (5), e.g. one or more desired dim levels and/or a desired dim level range, and
- one or more physical characteristics of the desired lighting module (5), e.g. shape, size and/or form factor,
- determining, using the obtained data and one or more databases, different lighting modules, e.g. different LED modules,
- outputting via a user interface the determined different lighting modules, and
- using as the obtained information on the desired lighting module (5) information on the lighting module of the different lighting modules that is selected via the user interface.

8. The method according to any one of the previous claims, wherein the information on the PV system (1) comprises at least one of
- technology type of PV panel(s) (1a) of the PV system (1),
- number of PV panels (1a) of the PV system (1),
- a size of the PV panel(s) (1a) of the PV system (1),
- a position of the PV panel(s) (1a) of the PV system (1) at the luminaire (10), and
- an orientation of the PV panel(s) (1a) of the PV system (1), e.g. azimuth angle and/or tilt angle.

9. The method according to any one of the previous claims, wherein generating (S2000) the recommendation for the electrical energy storage (3) comprises
- computing, using the information on the installation location and the information on the PV system (1), optionally and using the information on at least one of the environment of the installation location, sunlight times at the installation location, the dimension(s) of the luminaire (10) and the control unit (2), an electrical power that the PV system (1) is configured to provide to the electrical energy storage (3).

10. The method according to claim 9, wherein computing the electrical power that the PV system (1) is configured to provide to the electrical energy storage (3) comprises
- determining, using the information on the installation location, optionally and using the information on the environment of the installation location, sunlight times at the installation location and/or the dimension(s) of the luminaire (10), an amount of light falling onto the PV system (1) when the luminaire (10) is installed at the installation location.

11. The method according to any one of the previous claims, wherein generating (S2000) the recommendation for the electrical energy storage (3) comprises
- computing, using the information on the desired lighting module (5), optionally and using the information on at least one of the presence of one or more sensors at the luminaire (10), the electrical supply time period, the DC/DC driver (4), the control unit (2) and the desired operation setting of the desired lighting module (5), an electrical power that is required by the luminaire (10).

12. The method according to claim 11 when depending on claim 9 or 10, wherein generating (S2000) the recommendation for the electrical energy storage (3) comprises
- computing, using the electrical power that the PV system (1) is configured to provide to the electrical energy storage and the electrical power that is required by the luminaire (10), optionally and using the information on the desired specification(s) of the electrical energy storage (3) and/or a position of the electrical energy storage (3) at the luminaire (10), a capacity of the electrical energy storage (3).

13. The method according to any one of the previous claims, wherein outputting (S3000) the recommendation for the PV system (1) comprises
- outputting information on at least one of a number of PV panels (1a) of the PV system (1), a size of the PV panel(s) (1a), a position of the PV panel(s) (1a) of the PV system (1) at the luminaire (10), and an orientation of the PV panel(s) (1a) of the PV system (1), e.g. azimuth angle and/or tilt angle.

14. The method according to any one of the previous claims, wherein outputting the recommendation for the electrical energy storage comprises
- outputting information on at least one of an electrical energy storage type and a capacity of the electrical energy storage, and optionally a voltage of the electrical energy storage and/or the desired specification(s) of the electrical energy storage.

15. The method according to any one of the previous claims, wherein outputting the recommendation for the electrical energy storage (3), the PV system (1), the DC/DC driver or the control unit comprises
- outputting one or more different electrical energy storages (3), PV systems (1), DC/DC drivers or control units, respectively, which optionally may be ranked with regard to fulfilling one or more requirements.

16. The method according to any one of the previous claims, wherein outputting (S3000) the recommendation comprises
- outputting information on an operation setting of the recommended control unit (2) and/or the recommended DC/DC driver (4).

17. The method according to claim 16, wherein outputting the information on the operation setting comprises at least one of
- outputting configuration data for configuring the control unit (2) and/or the DC/DC driver (4),
- outputting a code, e.g. a QR code, comprising the information on the operation setting, and
- displaying the information.

18. The method according to any one of the previous claims, wherein the method comprises
- implementing the luminaire with at least one of the recommended electrical energy storage (3), PV system (1), DC/DC driver (4), and control unit (2); and/or
- configuring the control unit (2) and/or the DC/DC driver (4) according to the information on the operation setting.

19. The method according to any one of the previous claims, wherein the method comprises
- ordering at least one of the recommended electrical energy storage (3), PV system (1), control unit (2), and the DC/DC driver (4) from an online store, and
- optionally providing the information on the operation setting to the online store.

20. A device for planning a luminaire (10), optionally street luminaire, the luminaire (10) comprising an electrical energy storage (3) for electrically supplying the luminaire (10) and a photovoltaic, PV, system (1) for charging the electrical energy storage (3), wherein the device is configured to perform the method according to any one of the previous claims.

21. A computer program comprising instructions which, when the program is executed by a computer, cause the computer to carry out the method according to any one of claims 1 to 19.

22. A computer-readable storage medium comprising instructions which, when executed by a computer, cause the computer to carry out the method according to any one of claims 1 to 19.
